## Europäisches Patentamt
## European Patent Office
## Office européen des brevets

(11) Publication number: **0 001 176**

A1

# EUROPEAN PATENT APPLICATION

(21) Application number: **78300354.4**

(22) Date of filing: **06.09.78**

(51) Int. Cl.²: **B 62 D 21/10**
**B 62 D 25/20, B 62 D 53/06**

(30) Priority: **06.09.77 GB 37226/77**

(43) Date of publication of application:
**21.03.79 Bulletin 79/6**

(84) Designated contracting states:
**BE CH DE FR NL SE**

(71) Applicant: **CHRIS HUDSON (INTERNATIONAL) LIMITED**
**Hudson House North Street**
**Romford Essex(GB)**

(72) Inventor: **Ludwig, Richard Anthony**
**10 St Marys Lane Upminster**
**Essex(GB)**

(74) Representative: **Williams, John Francis et al,**
**J.F. Williams & Co 34 Tavistock Street**
**London WC2E 7PB(GB)**

(54) Improvements in or relating to chassis members.

(57) A method of constructing a chassis member comprises the provision of a first metal plate or strip like member (11) with a plurality of apertures (12) therethrough. A plurality of reinforcing members (13) are welded to one face of a second metal plate or strip like member (10) in positions such that when the first plate (11) is positioned above the second plate (10) the reinforcing members (13) each overlap the edge of an aperture in the first plate. The first plate (11) is welded to the reinforcing members (13) at the edge of the apertures (12). The invention also includes a chassis beam of such construction. Although the invention is not restricted in application to a particular field it is particularly suitable for trailer necks of heavy goods trailers such as are connectible to tractor vehicles by a so called fifth wheel coupling.

FIG. 1

0001176

- 1 -

## Improvements in or relating to chassis members

This invention relates to chassis members such as are
employed in the construction of vehicle chassis and more
particularly but not solely to semi-trailers for commercial
vehicles.

When a beam is required for chassis construction it is
normal to employ a girder of shaped configuration e.g.
"I" or channel section or a tubular cross section normally
rectangular. Where high strength is required the depth
of such sections has to be increased accordingly and this
can mean a considerable waste of height for example when
constructing a trailer chassis. One way of increasing
the strength without increasing the height is to make
the beam of more substantial wall size or to make it solid.
Such techniques lead to excessive beam weight and are
not satisfactory for many applications.

In the construction of heavy goods trailers for attachment
to tractor units by means of a so called fifth wheel
coupling the trailer normally has at its coupling end a
part which has an upwardly and forwardly inclined portion
coupled between a front horizontal portion provided with
the coupling element e.g. king pin and a rear main
horizontal portion forming part of the main chassis for
carrying the load. The upwardly extending portion and front portion are termed the trailer neck and the forward portion is arranged at a suitable height to engage the tractor by means of a fifth wheel coupling. The body of an enclosed trailer normally extends over the fifth wheel coupling and it will be appreciated that excessive depth of the neck portion means a loss of potential carrying volume for the body. The invention is particularly suitable to the construction of the neck of such a vehicle as it can be effected with a comparatively small depth.

This invention seeks to provide a method of manufacturing a chassis member of considerable strength which is particularly suitable to the manufacture of trailer necks and also to provide such a strong chassis member, for example a chassis neck.

The main advantage of the invention is the enablement of providing chassis members e.g. trailer necks which are of comparatively small height but which have considerable strength.

According to one aspect of the invention there is provided a method of constructing a chassis member comprising providing a first metal plate or strip like member with a plurality of apertures therethrough, welding to one face of a second metal plate or strip like member a plurality of reinforcing members in positions such that when the first plate is positioned above the second plate the reinforcing members each overlap the edge of an aperture in the first plate and welding the first plate at edge of the apertures to the reinforcing members.

According to another aspect of the invention there is provided a chassis member comprising a first metal plate or strip like member with a plurality of apertures therethrough, a second plate or strip like member disposed opposite the first member and a plurality of reinforcing members extending between opposing faces of the two plate or strip like elements and secured to the second plate by welding to the face and to the first plate by welds at the edge of the apertures.

The reinforcing members may comprise lengths of metal tube of any suitable cross section e.g. round or rectangular and the apertures may be of similar cross sectional shape having dimensions larger than the internal cross sectional dimensions of the pipe but less than the external cross sectional dimensions of the tube the tube lengths being arranged on the second plate or strip like member such that their ends each overlap the edge of a particular one of the apertures in the first plate or strip like member along its entire periphery and are welded therealong.

A plurality of torsion resisting structural elements may be welded between different ones of the reinforcing members. The structural elements may be arranged to cross one another to provide additional support. The structural elements may be strip like elements which are disposed substantially perpendicularly to the second plate and may be welded thereto.

The invention also includes a semi-trailer having a coupling end or neck constructed as hereinbefore defined.

In order that the invention and its various other features may be understood more easily, some embodiments thereof will now be described, by way of example only, with reference to the drawings, in which:-

Figure 1 is a schematic illustration of a trailer neck constructed in accordance with the invention,

Figure 2 is a plan view showing detail of the welding of parts of the neck,

Figure 3 is a cross sectional view taken horizontally between upper and lower plates of a trailer neck constructed in accordance with the invention,

Figure 4 is a vertical cross sectional view of the trailer neck of Figure 3 taken on the line A-A,

Figure 5 is a front elevational view of a chassis having the neck illustrated in Figures 3 and 4.

Figure 6 is a vertical cross sectional view of part of the main part of the trailer beam to the rear of the neck,

Figure 7 is a cross sectional view taken on the line x-x of Figure 6,

Figure 8 is a cross sectional view taken on the line y-y of Figure 7,

Figure 9 is a cross sectional view similar to Figure 8 showing an alternative arrangement of the fabrication of the beam,

Figure 10 is a horizontal cross sectional view similar to Figure 7 taken longitudinally of an alternative construction of beam,

Figure 11 is a horizontal cross sectional view similar to Figure 7 taken longitudinally of another alternative construction of beam,

Figure 12 is a cross sectional view taken horizontally and longitudinally of an alternative construction of beam, and

Figure 13 is a transverse cross sectional view of yet another possible construction of beam.

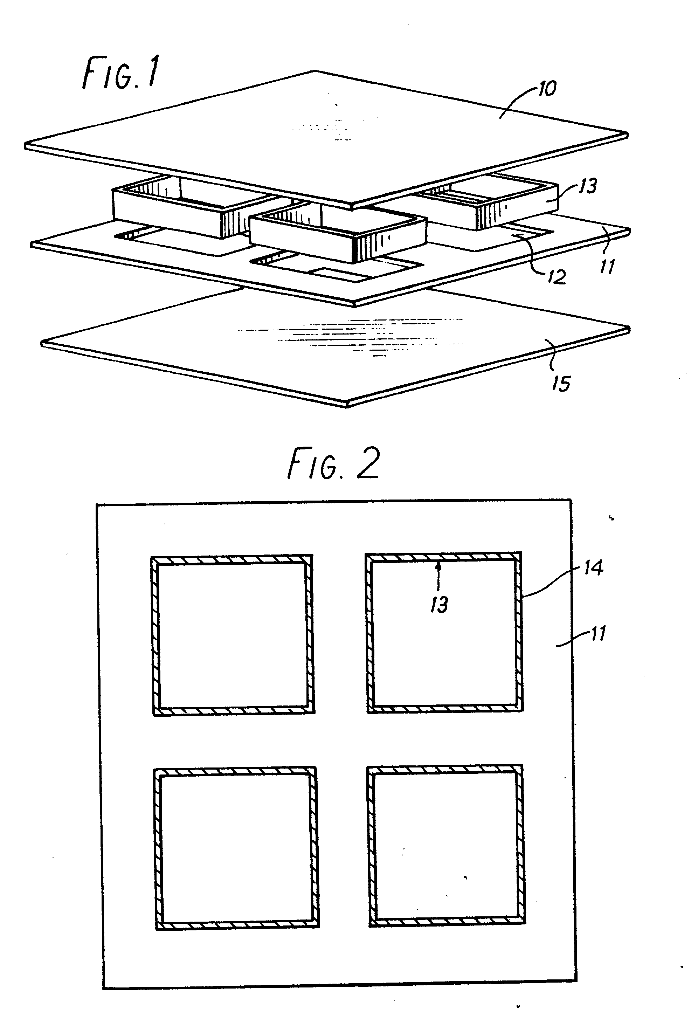

Referring now to Figures 1 and 2 the construction of a reinforced chassis neck will be described. The neck comprises a plain steel plate 10 and an apertured steel plate 11 having rectangular apertures 12 extending therethrough. Reinforcing members 13 are formed of short lengths of rectangular steel pipe. The apertures 12 are of dimensions greater than the internal dimensions of the pipe but less than the external dimensions of the pipe. The pipe lengths are carefully positioned on one face of the plate 10 and are welded thereto at one end such that when the plate 11 is positioned against the free ends of the pipe lengths in facing alignment with the plate 10 the free pipe ends will align with the apertures 12 such that they each overlap the perimeter of an aperture and permit welding of the plate 11 thereto by means of welds 14 along the edge of the apertures as can be seen from Figure 2. A rubbing plate 15 is then placed over the apertured plate 11 and is joined thereto by deep welds along the periphery of the plates.

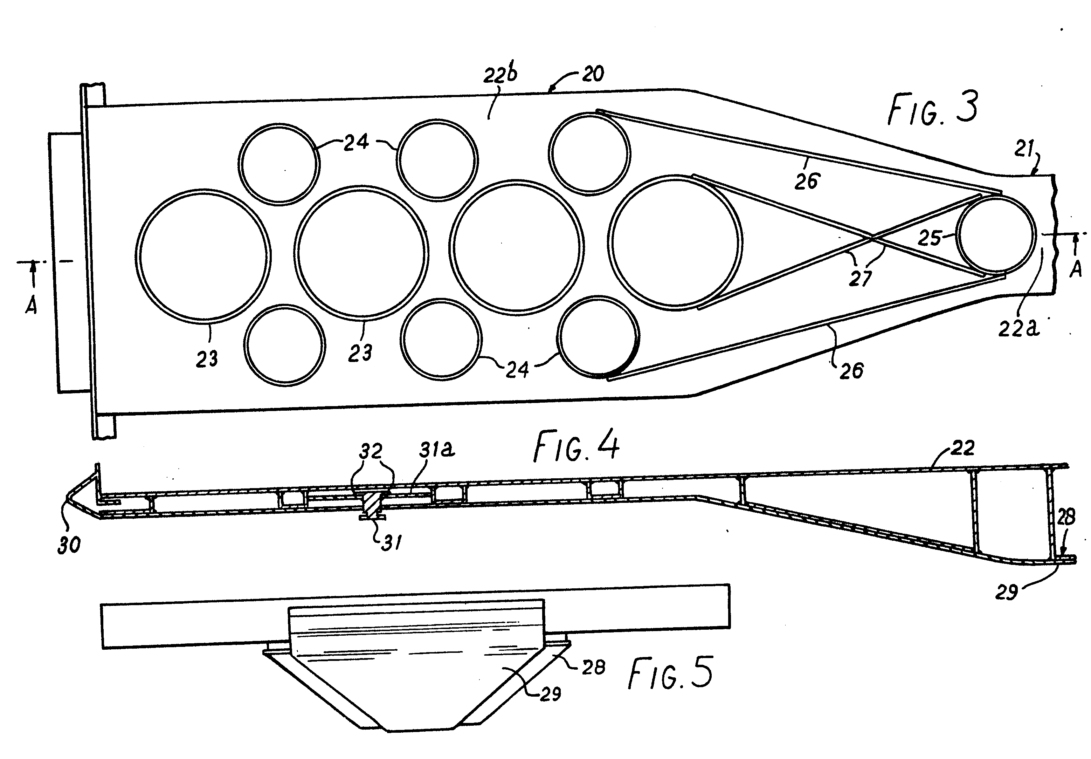

Figures 3 to 5 show part of a production version of a trailer draw bar having a neck 20 formed integrally with a beam portion 21 of box section. In this case a flat steel plate 22 has a strip like portion 22a which forms the upper side of the beam portion 21 and a widened portion 22b at one end which forms part of the neck and which is equivalent to plate 10 of the schematic illustration. Evenly spaced along the centre of the widened portion in the longitudinal direction there are provided four reinforcing members 23 in the form of short lengths of steel pipe of outside diameter 20 inches which are welded at one end to one face of the widened portion 22b and project substantially perpendicularly thereto. Reinforcing members 24 formed of lengths of a smaller diameter steel pipe of outside diameter 12 inches are provided to each side of the row of reinforcing members 23 and are arranged three to each side in two lines parallel to the row of reinforcing members 23 and are secured to the widened portion 22b by welding and project substantially perpendicularly thereto. A further reinforcing member 25, similar to reinforcing members 24 but longer is similarly joined to the plate 20 along the common mounting axis of the members 23 but is positioned where the thickened portion 22b joins the strip like portion 22a.

The reinforcing members 23, 24 and 25 are accurately located in predetermined positions on the plate 22 before welding. A respective bracing plate 26 is welded between the reinforcing member 25 and the nearest reinforcing member 24 in each of the two rows. Two bracing plates 27 are welded between the reinforcing member 25 and the nearest one of the reinforcing members 23, and these plates extend across one another and the longitudinal axis of the plate 22. The bracing plates act as torsion resisting elements. The bracing plates can be welded also to the plate 22.

A lower steel plate 28 of similar shape to the plate 22 has its broader portion preformed as can be seen from Figure 4 such that from the broader end it has a horizontal portion adjoining an inclined portion adjoining the strip like portion which is again horizontal. This plate 28 is provided with apertures which can be accurately aligned with the free ends of the reinforcing members 23, 24 and 25 and are of diameter intermediate the internal and external diameters of a respective one of the reinforcing members such that upon alignment a weld can be made between the edge of each aperture and the free ends of the pipe sections.

A king pin 31 of 2 inch diameter is mounted through a central hole in a steel disc 31a of diameter equal to the internal diameter of a reinforcing member 23. The disc 31a is located in the second reinforcing member from the left as shown in Figure 4 such that it projects below the level of the plate 28 and the plate is welded to the inside of the reinforcing member. The plate may be provided with reinforcing ribs which may extend radially and which may be welded to the inside of the reinforcing member 23.

A rubbing plate 29 preformed with a lead in 30 for facilitating engagement to a fifth wheel coupling of a tractor vehicle is now welded to the plate 28 by means of deep welds along its edge. The plate 29 is provided with a through hole which aligns with the king pin 31 which is inserted through the hole prior to welding of the plate 29. The neck construction described is of only $3\frac{1}{2}$ inches in depth but is capable of use with goods trailers exceeding 10 tons in loading capacity.

Although the constructions described employ rectangular or circular pipe for the reinforcing members other cross sectional shapes can be employed provided suitably shaped apertures are provided in the apertured plate. It is not essential that the reinforcing members are tubular in fact many different cross sections of girder could be employed e.g. "H" or "U" shape in which case the apertured plates could be provided with similarly shaped aligning slots or with a patternof slots to enable welding at selected positions where slots and reinforcing members are in alignment.

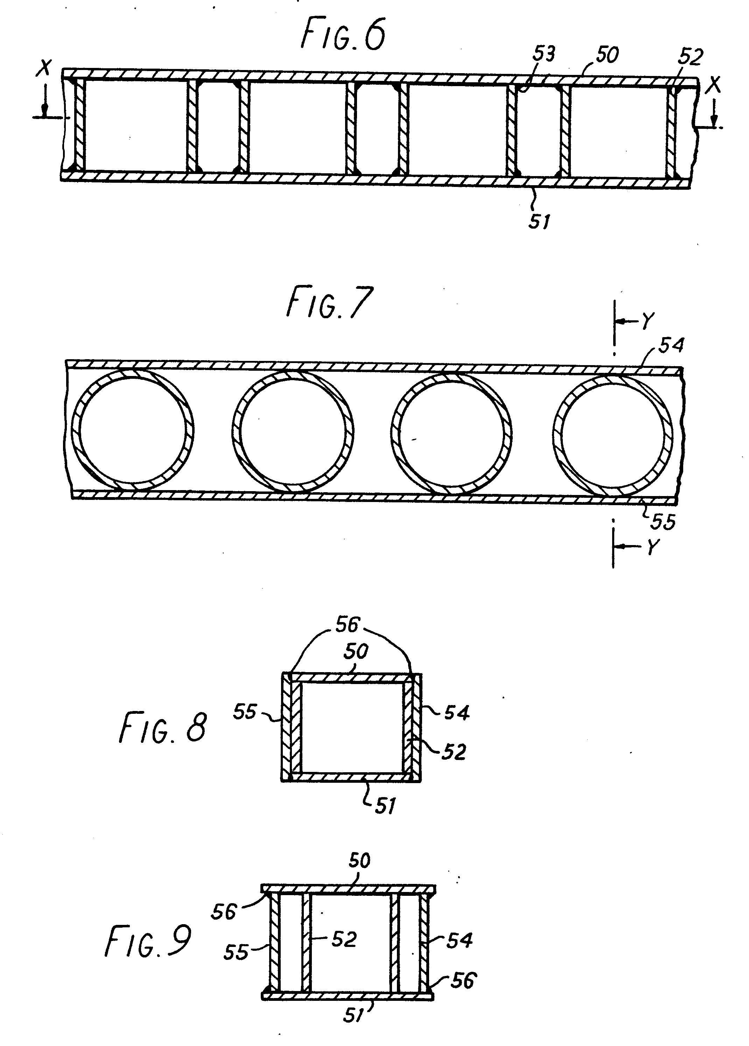

The beam portion 21 is preferably provided with internal reinforcement such as described in our co-pending European Patent Application entitled "Improvements in or relating to trailers" filed on the same day as this Application and claiming priority from British Patent Application No. 37225/77. The disclosure of that European Patent Application is hereby incorporated by reference Figures 7 to 11 show some possible constructions for this beam portion which are disclosed in that Application.

The beam portion of Figures 6 to 9 comprises upper and lower strips 50, 51 respectively of steel plate between which reinforcing members 52 formed of equal length sections of steel pipe, are evenly spaced apart along the length of the strips 50 and 51 and are welded thereto by welds 53.    Side strips 54, 55 of steel plate of width slightly larger than the length of the reinforcing members 52 are welded at their edges to the edges of the upper and lower strips 50 and 51 by means of deep welds 56 to complete a box section construction.    However, the side strips are not essential to the construction of a robust beam and may be dispensed with if desired.

The beam so fabricated provides an extremely strong yet comparatively lightweight construction.

The reinforcing members 52 can be arranged to be in contact one with another along the length of the beam and if sufficiently large in diameter can have additional internal welds where they join to upper and lower strips 50 and 51.

It will be appreciated that in the case of box section construction for the beam the provision of the side strips after the interconnection of the reinforcement members and upper and lower strips permits access for the welding equipment.

The construction of Figure 9 employs reinforcing members 52 which have a cross sectional diameter less than the internal width of the box section and leave a channel on each side of the beam for routing of for example cables.

Although the construction illustrated in Figures 6 to 9 employs pipe of circular cross section it will be appreciated that pipes of other cross sectional shape could be employed.    In addition although each pipe is shown to be of diameter equal to the width of the box section a plurality of smaller pipes could be disposed side by side transversely of the box section.

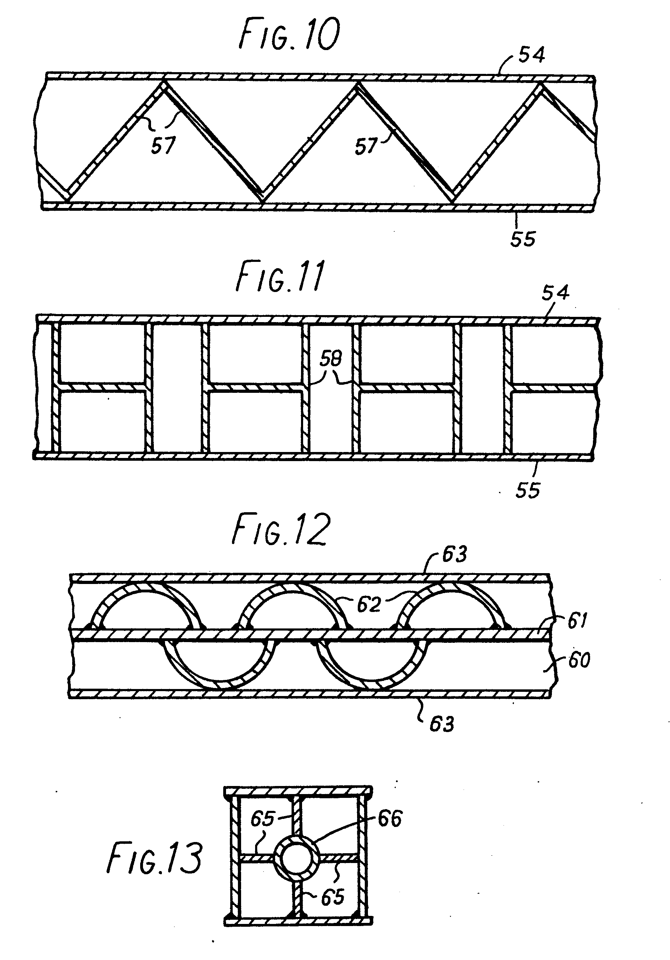

The drawings of Figures 10 to 13 show four possible alternative types of reinforcing members which may be employed. In Figure 10 sections 57 of steel angle "L" shaped cross section are employed and these are arranged side by side so as to traverse the width of the box section as will be clear from the drawing and are again welded to top and bottom strips (not shown) of the box section.

In Figure 11 "H" section steel girder sections 18 are employed the uprights of the "H" extending transversely of the box section at right angles to its length. The sections 58 are again welded to the top and bottom strips (not shown) of the box section.

Sections of many other standard girder cross sectional shapes can be employed instead of "L" or "H" shape.

The beam of Figure 12 is basically of "I" configuration having upper and lower ends 60 and an upright 61. Reinforcing members 62 are in this case formed of short lengths of steel pipe in this case of circular cross section which have been cut in half along their longitudinal axis to provide lengths of semi circular cross section. These reinforcing members are of length equal to the distance between ends 60 and are welded to the ends and to the upright 61 and can be staggered on opposite sides of the upright as shown or can be oppositely disposed in alignment. Optional side plates 63 can then be welded to the ends 60.

The beam of Figure 13 employs reinforcing members 65 which are of plate like form and which extend between a tubular member 66 and the upper, the lower and side plates of a box section beam. The tubular member 66 is useful for example for routing cables for control of vehicle functions. The reinforcing members 65 may be formed by four continuous strips which extend along the tubular member 66 or alternatively a plurality of plate like elements can be provided in succession along the tubular member.

Although the beam constructions described have employed reinforcing members formed of sections of for example pipe extending axially at right angles to the upper and lower plates of the beam with a view to providing maximum strength in the downward direction, similar constructions in which the reinforcing members extend with their axes at right angles to side plates of the beam can be employed.

The beams described are particularly suitable for producing a trailer having a chassis with a single longitudinally extending beam which beam can be provided with wheels having a fully independant suspension system such as is described in our co-pending European Patent Application entitled "Improvements in or relating to wheel mounting assemblies and suspension systems" filed the same day as this Application and claiming priority from British Patent Application No: 37224/77. The disclosure of that European Patent Application is hereby incorporated by reference.

FIG.1

FIG. 2

0001176

FIG. 3

FIG. 4

FIG. 5

*FIG.6*

*FIG.7*

*FIG.8*

*FIG.9*

FIG.10

54

57

57

55

FIG.11

54

58

55

FIG.12

63

62

61

60

63

FIG.13

65

66

65

European Patent
Office

**EUROPEAN SEARCH REPORT**

0001176

Application number

EP 78 30 0354

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | B 62 D 21/10 |
| X | <u>US - A - 2 327 585</u> (ULRICH) <br> * Whole patent * <br><br> --- | 1,2,3, 8 | 25/20 53/06 |
| | <u>US - A - 2 761 699</u> (MARTIN) <br> * Whole patent; see in particular cases of figures 2 and 3 * <br><br> --- | 13,14, 16 | |
| A | <u>DE - B - 1 162 211</u> (DAIMLER-BENZ) <br> * Whole patent * <br><br> --- | 1 | TECHNICAL FIELDS SEARCHED (Int.Cl.²) <br><br> B 62 D |
| A | <u>GB - A - 525 792</u> (TUGWOOD) <br> * Page 2, column 1 * <br><br> --- | 1 | |
| A | <u>DE - C - 690 822</u> (BORGWARD) <br> * Page 1 * <br><br> ----- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 13-12-1978 | SCHMAL |

EPO Form 1503.1  06.78